# EUROPÄISCHE PATENTSCHRIFT

(11) **EP 2 801 151 B1**
(45) Veröffentlichungstag und Bekanntmachung des Hinweises auf die Patenterteilung: **20.04.2016**
(21) Anmeldenummer: 12818783.8
(22) Anmeldetag: 24.12.2012
(51) Int. Cl.: H02P 27/08, H02K 55/00

(54) **STROMKURVE FÜR EINE SUPRALEITENDE ELEKTRISCHE MASCHINE**
CURRENT CURVE FOR A SUPERCONDUCTING ELECTRICAL MACHINE
COURBE DE COURANT D'UNE MACHINE ÉLECTRIQUE SUPRACONDUCTRICE

(30) Priorität: 07.01.2012 DE 102012000170
(43) Veröffentlichungstag der Anmeldung: 12.11.2014
(73) Patentinhaber: Oswald Elektromotoren Gmbh, 63897 Miltenberg (DE)
(72) Erfinder: KOWALSKI, Thomas, 63776 Mömbris (DE); REIS, Thomas, 63924 Kleinheubach (DE); TEIGELKÖTTER, Johannes, 63741 Aschaffenburg (DE); OSWALD, Bernhard, 63897 Miltenberg (DE)
(74) Vertreter: Katscher Habermann Patentanwälte
(86) Internationale Anmeldenummer: PCT/EP2012/076871
(87) Internationale Veröffentlichungsnummer: WO 2013/102597

(56) Entgegenhaltungen:
- DE-A1- 1 614 970
- DE-B- 1 094 801
- DE-B1- 2 345 035
- JP-A- S5 518 817
- JP-A- H05 243 630

## Beschreibung

Die Erfindung bezieht sich auf einen Motor, der mit Wicklungen aus supra-leitendem Material versehen ist, welche für den Betrieb des Motors unter eine Sprungtemperatur heruntergekühlt werden, wo der Widerstand der Wicklung schlagartig abnimmt.

Herkömmliche Steuerungen betreiben Motoren und insbesondere auch Motoren mit supra-leitenden Wicklungen üblicherweise mit sinusförmigen Stromkurven. Die Stromkurven können dabei auch durch pulsweitenmodulierte Pulse (PWM) abgebildet werden.

Bedingt durch Effekte der Supraleitung werden jedoch dann in bestimmten Zuständen Verlustleistungen und eine überproportionale Eigenerwärmung der supraleitenden Wicklung ausgelöst. Da die Wicklungen jedoch in speziellen Tieftemperaturen betrieben werden, führt eine solche Erwärmung in diesen Bereichen zu einer überproportionalen notwendigen Kühlleistung die am Motor bereitgestellt werden muss.

Diese erhöhte Kühlleistung schlägt sich dann negativ in der Leistungsbilanz des Motors nieder.

Es ist die Aufgabe der Erfindung, das vorhergehend beschriebene Problem zu lösen. Darüber hinaus soll eine Ansteuerung den Motor so betreiben, dass dieser eine höhere Antriebsleistung bei weniger Kühlversorgungsleistung bereitstellen kann.

Diese Aufgaben werden mit einer Stromsteuerkurve gelöst, wie sie in den Ansprüchen beschrieben ist.

Für den leistungsoptimierten Betrieb wird der Motor und werden insbesondere die Wicklungen im Betrieb nicht mit sinusförmigen Stromkurven betrieben, sondern mit optimierten, erfindungsgemäßen Stromkurven, die nachfolgend näher beschrieben werden.

Drehzahlvariable Elektromotoren/-generatoren werden mit Umrichterspeisung betrieben. Diese kann in verschiedenen Verfahren, wie z.B. durch die eingangs erwähnte PWM, also geregelte Strom- und Spannungsvorgaben in dem Felderregersystem der Motoren erzeugt werden.

Es ist üblich, spannungsgeregelt einen möglichst sinusförmigen Verlauf zu erzeugen, da so allgemein ein homogenes Drehverhalten erzielt werden kann.

Wird die Drehfeldwicklung im Stator mit supraleitenden Leitern hergestellt, kann wie ebenfalls eingangs erwähnt, ein höheres Feld erzeugt werden als dies bei normalleitender Technik - also zum Beispiel mit Kupferwicklungen - möglich ist. Dies ist für die Leistungs- und Kraftdichte des Motors vorteilhaft. Die Grenze der Auslastbarkeit des Wicklungssystems ist bei normalleitenden Systemen die max. zulässige Erwärmung des Wicklungssystems. Diese kann durch geeignete Kühlverfahren beeinflusst werden.

Im supraleitenden System sind die Verlustmechanismen andersartig ausgeprägt. Dies macht das Kühlsystem auch wegen der tiefen Arbeitstemperaturen anspruchsvoller, aufwändiger. Somit wird ein verlustoptimierter Betrieb nicht nur für die möglichst effiziente Ausnutzung des Motors sondern auch für die einfache Gestaltung des Kühlaufbaus angestrebt. In normalleitenden Wicklungssystemen werden die Verluste in den Wicklungen hauptsächlich durch den elektrischen Widerstand des Leiters bestimmt. Bei Einsatz hoher Frequenzen kommen noch zusätzliche Verlustmechanismen wie z.B. Wirbelstrom- oder Stromverdrängungsverluste hinzu.

Da ein Supraleiter im Betrieb unter der Sprungtemperatur keine oder nur geringste Verluste durch den ohmschen Widerstand aufweist sind die entstehenden Verluste im Leiter niedriger, was vorteilhaft für ein supraleitendes System ist.

Bei der Nutzung des Supraleiters mit zeitveränderlichen Strömen entstehen aber durch verschiedene - teilweise noch nicht vollständig erklärbare Effekte - auch Verluste, die bei kühlen Temperaturen unterhalb der Sprungtemperatur des verwendeten Supraleiters abgeführt werden müssen.

Dies ist zum einen energetisch sehr aufwändig, da durch die Einschränkung der Carnot-Effizienz die Verluste bei kühlen Temperaturen mit einem Vielfachen an Leistung auf der warmen Seite kompensiert werden müssen. Zum anderen erhöhen die Verluste die Temperatur des Supraleiters, was seine Anwendung unterhalb der Sprungtemperatur erschwert.

Es ist daher wichtig, Verluste im Supraleiter so weit wie möglich zu reduzieren, um einen möglichst effizienten Betrieb des Motors zu ermöglichen.

Mit der hier beschriebenen Erfindung ist es möglich, eine Strom- und Spannungsspeisung des Drehfeldsystems mit minimierten Verlusten im supraleitenden Material zu erzielen.

Im Gegensatz zu den herkömmlichen Drehfeldspeisungen wird erfindungsgemäß hierzu nicht eine möglichst sinusförmige Spannungserregung der Wicklungen erzeugt, sondern eine der Geometrie und den Eigenschaften des Supraleiters entsprechend angepasste Spannungsform vorgegeben.

Dies ist z.B. vorzugsweise ein rechteckförmiges oder trapezförmiges Spannungssignal, das durch den Einsatz von Umrichtertechnologien sowohl Frequenz- als auch amplitudenvariabel sein kann - womit dann auch veränderliche Drehzahl- und Leistungsbereiche abdeckbar sind.

Ein wesentlicher Bestandteil der Verluste im Supraleiter ist auch abhängig vom Verhältnis des Strom-Spitzenwerts zum kritischen Strom des Supraleiters. Der kritische Strom des Supraleiters ist der Strom bei dem die Supraleitung zusammenbricht, und zu welchem immer genügend Abstand eingehalten werden sollte.

So ist es für eine weiter optimierte Bestromung / Ansteuerung der Wicklung vorteilhaft, statt einer sinusförmigen Bestromung die möglichst rechteckförmige oder trapezförmige Stromkurve jedoch mit dem gleichem Flächenintegral wie bei einem herkömmlichen Sinussignal zu verwenden.

Die Ansteuerung mit einem Sinussignal hat insbesondere den Nachteil, dass zum Zeitpunkt oder im Zeitraum wenn der Magnetpol des Rotors sich bei Drehung dem Wicklungskern annähert oder gegenübersteht, oder wenn in der Phase kurz vor oder kurz nach diesem Zeitpunkt der magnetische Fluss und die Induktivität in der Spule maximal ist, und bedingt durch die dann anstehende Sinusspitze der Stromkurve ein großer Stromwert durch die Spule fließt.

Dieser Stromwert I kommt dann sehr nah an den kritischen Stromwert Ic heran, bei dem die Supraleitung zusammenzubrechen kann.

Neben der hinsichtlich dieses Effekts angepassten, im wesentlichen rechteckigen oder trapezförmigen Stromsteuerkurve ist daher ein weiteres erfindungsgemäßes Merkmal genau zu diesem kritischen Zeitpunkt, wo die maximale Induktivität anliegt und der maximale Strom durch die Spule fließen kann, den Strom zu diesem Zeitpunkt anzupassen oder in diesem Bereich abzusenken.

Ein weiteres erfinderisches Merkmal ist, dass die Reduzierung zu diesem Zeitpunkt oder in diesem Bereich betragsmäßig in andere Bereiche der Stromkurve verlegt wird.

So kann entsprechend dieser Reduzierung in einem anderen, z.B. vorderen Bereich der Stromkurve dieser Betrag aufaddiert werden.

Vorteilhafterweise bleibt auch dann das Mittel der Gesamtbelastung immer noch wesentlich unterhalb der Spitzenbelastung einer herkömmlichen sinusförmigen Stromkurve, und ist insbesondere zu dem Zeitpunkt angepasst, wo der Strom in der Spule maximal wird.

Durch diese Anpassung kann dann z.B. auch die gleiche oder eine größere Nutzleistung erzielt werden, wobei die Verluste aber deutlich reduziert werden, und somit viel weniger Kühlleistung am Motor bereitgestellt werden muss.

Ebenfalls ist durch diese Ansteuerung möglich, die Leistung an einem baugleichen Motor durch diese Ansteuerung zu erhöhen.

Für den leistungs- und drehzahlvariablen Betrieb kann eine solche Stromkurve z.B. mit PWM-Verfahren erzeugt werden, wobei üblicherweise in einem festen Takt im Bereich von Kilohertz unterschiedlich breite Pulse auf die Spule gegeben werden.

Um eine homogene Drehung des Rotors und um eine weitere Optimierung der Leistung mit dem nicht mit sinusförmigen Signalen erzeugten Drehfeld herbeizuführen wird weiterhin die Felderregung im Rotor an das Feld des Stators angepasst. Dies kann z.B. bei Rotoren mit Permanentmagneten durch die Ausgestaltung der Magnetform und der Rotorgeometrie erfolgen aber auch erfindungsgemäß in einer weiteren Ausgestaltung durch einen verkürzten Polabstand von üblichen 20% auf ca. 10 - 0 %.

Eine weitere Optimierung kann bezüglich der Kühlung dadurch herbeigeführt werden, dass die Spulen einzeln gekühlt werden, und hierzu von separaten Gehäusen umschlossen sind. Diese Gehäuse können des Weiteren gegen Erwärmung von außen mit reflektierender Isolationsfolie umwickelt sein. Die Verwendung von mehreren Schichten mit leichtem Abstand verstärkt diesen Effekt.

Solch ein Motor ist dann auch insbesondere zu Verwendung in Fahrzeugen mit Akkuantrieb verwendbar, und nutzt gespeicherte elektrische Energie optimal aus, setzt diese in hohe Beschleunigungen oder Reichweiten um.

Weitere Vorteile und Gesichtspunkte ergeben sich aus den abhängigen Ansprüchen, der Beschreibung der Ausführungsbeispiele und den Zeichnungen.

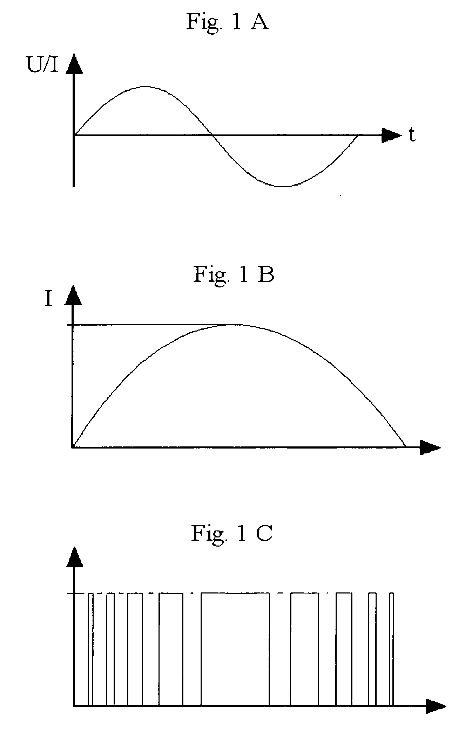

Figuren 1 A - 1 C zeigen den Stand der Technik:
   Fig. 1A zeigt eine sinusförmige herkömmliche Stromsteuerkurve, bzw. Spannungssteuerkurve.
   Fig. 1B zeigt eine sinusförmige Halbkurve einer Stromsteuerkurve.
   Fig. 1C zeigt schematisch wie eine solche unter Fig. 1 B gezeigte sinusförmige Halbkurve mit der "Pulsweiten Modulation" - PWM im Motorbetrieb in einer Steuerung realisiert wird.

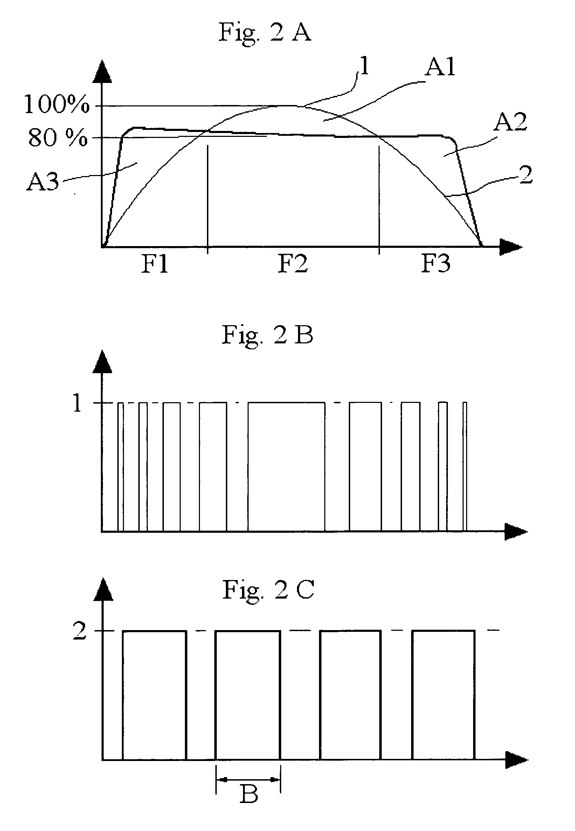

Fig. 2A zeigt die erfindungsgemäße Stromsteuerkurve 2, wobei der durchschnittliche Maximalwert bei ca. 80 % liegt, und der Flächeninhalt A2 / A3 der rechteckigen oder trapezförmigen Stromsteuerkurve gleich oder vorzugsweise größer als der Flächeninhalt A1 der herkömmlichen sinusförmigen Stromkurve 1 sein kann.
   Die Überdeckung der Stromsteuerkurve mit einer sinusförmigen Referenzstromsteuerkurve zeigt im vorderen und hinteren Bereich F1 / F3, dass dort der Spitzenwert der Stromsteuerkurve 2 höher als der der herkömmlich sinusförmigen Referenzstromsteuerkurve 1 ist.
Fig. 2B zeigt eine schematische Pulsweiten-Modulation für die sinusförmigen Stromkurve 1 aus Figur 2A und
Fig. 2C zeigt eine schematische Pulsweiten-Modulation für die rechteckige oder trapezförmige Stromkurve 2 aus Figur 2 A mit unterschiedlicher oder vorzugsweise gleicher Pulsbreite B.

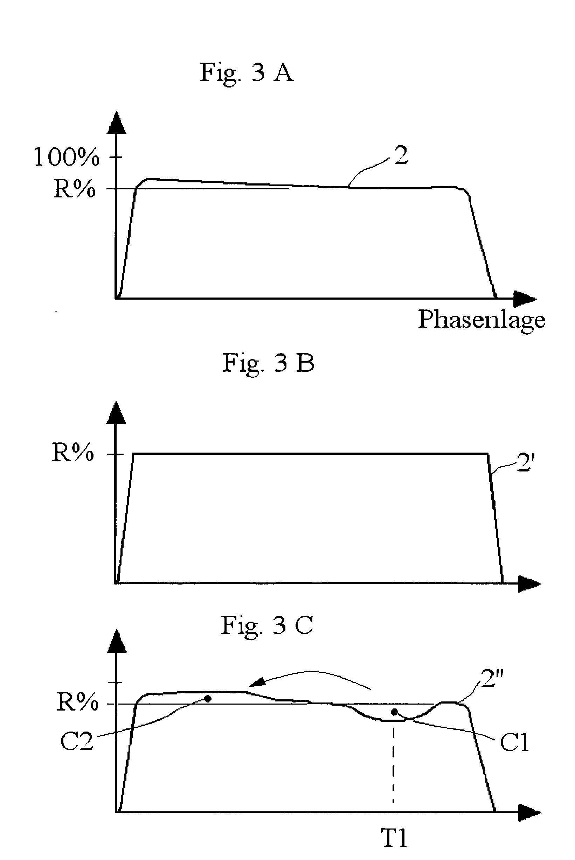

Fig. 3A zeigt die erfindungsgemäße rechteckige oder trapezförmige Stromkurve 2 die im Mittel einen reduzierten Spitzenwert hat.
Fig. 3B zeigt eine trapezförmige Stromkurve 2' einer Stromsteuerkurve welche in einer Motorsteuerung hinterlegt werden kann. Der Effektivwert bleibt gleich der einer sinusförmigen Stromkurve, wenn der Flächeninhalt gleich ist.
Fig. 3C zeigt eine weitere erfindungsgemäße ausgestaltete - im Wesentlichen rechteckige oder trapezförmige Stromkurve 2" - wobei diese zu einem Zeitpunkt oder in einem Zeitraum T1, wenn die Induktivität oder der magnetischen Fluss in der Spule maximal wird angepasst, also reduziert ist.
   Die Wicklungen werden hierbei mit einer Stromsteuerkurve so betrieben, dass der Spitzenwert im Wesentlichen hoch ist, wenn das Streufeld niedrig ist oder so, dass der Spitzenwert der Kurve abgesenkt ist wenn das Streufeld zwischen Polen, Rotor und Stator hoch ist.
   Vorzugsweise wird die Reduzierung C1 betragsmäßig in einen vorderen Bereich der Kurve verschoben und dort aufaddiert, da in diesem Zeitbereich der magnetische Fluss niedriger ist.
   Der Effektivwert kann dann auch im Vergleich zu der sinusförmigen Stromkurve größer sein.

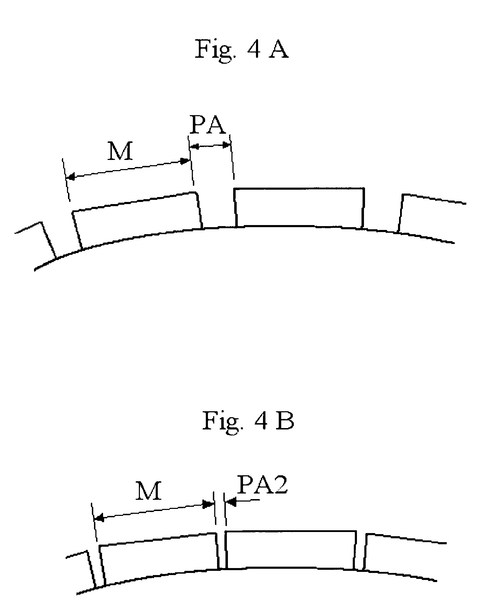

Fig. 4A zeigt einen Rotor mit aufgesetzten Magneten der Länge M und einen Polabstand PA von ca. 20%.
Fig. 4B zeigt eine weitere erfindungsgemäße Optimierung wobei das Streufeld am Rotor optimiert ist indem der Polabstand zwischen den Magneten auf vorzugsweise 5 % Lücke verkürzt ist.

Die Erfindung ist nicht auf die vorhergehenden ausführlichen Ausführungsbeispiele beschränkt. Sie kann in dem Umfang der nachfolgenden Ansprüche modifiziert werden.

## Patentansprüche

1. Verfahren zum Betreiben eines Elektromotors, welcher mit einem Stator und einem Rotor ausgerüstet ist, wobei Wicklungen von Spulen des Elektromotors aus einer supraleitenden Legierung bestehen, wobei die Wicklungen im Betrieb unter eine suprakritische Temperatur gekühlt werden, wodurch der Wicklungswiderstand sprungartig nach unten abgesenkt wird und wobei die Wicklungen mit einer Stromsteuerkurve betrieben werden, die im Wesentlichen trapezförmig oder rechteckig ist, **dadurch gekennzeichnet, dass** die jeweilige rechteckige oder trapezförmige Stromsteuerkurve zu einem ersten Zeitpunkt oder in einem ersten Zeitraum reduziert wird, wenn eine Induktivität oder ein magnetischer Fluss in der jeweiligen Spule maximal wird, und dass die Stromsteuerkurve zu einem zweiten Zeitpunkt oder in einem zweiten Zeitraum um die Reduzierung zu dem ersten Zeitpunkt bzw. in dem ersten Zeitraum betragsmäßig erhöht wird, so dass ein Spitzenwert der Stromsteuerkurve im Wesentlichen hoch ist, wenn ein Streufeld zwischen Polen, Rotor und Stator niedrig ist und der Spitzenwert der Stromsteuerkurve abgesenkt ist, wenn das Streufeld hoch ist.

## Claims

1. Method for operating an electric motor which is equipped with a stator and a rotor, wherein windings of coils of the electric motor are composed of a superconductive alloy, wherein the windings are cooled to below a supercritical temperature during operation, as a result of which the winding resistor is abruptly lowered, and wherein the windings are operated with a current control curve which is essentially trapezoidal or a square-wave curve, **characterized in that** the respective square-wave or trapezoidal current control curve is reduced at a first time or in a first time period if inductance or a magnetic flux in the respective coil reaches a maximum value, and **in that** the current control curve is increased in absolute value at a second time or in a second time period by the reduction at the first time or in the first time period, with the result that a peak value of the current control curve is essentially high when a leakage field between the poles, rotor and stator is low, and the peak value of the current control curve is lowered when the leakage field is high.

## Revendications

1. Procédé pour faire fonctionner un moteur électrique qui est équipé d'un stator et d'un rotor, des enroulements de bobines du moteur électrique se composant d'un alliage supraconducteur, les enroulements étant refroidis pendant le fonctionnement en dessous d'une température supracritique, de sorte que la résistance de l'enroulement soit réduite par sauts vers le bas et les enroulements fonctionnant avec une courbe de commande de courant qui est essentiellement trapézoïdale ou rectangulaire, **caractérisé en ce que** la courbe de commande de courant rectangulaire ou trapézoïdale respective est réduite à un premier instant ou pendant une première période de temps où une inductance ou un flux magnétique dans la bobine respective est maximal(e), et **en ce que** la courbe de commande de courant est augmentée à un deuxième instant ou pendant une deuxième période de temps en valeur absolue de la réduction au premier instant ou pendant la première période de temps, de telle sorte qu'une valeur de pointe de la courbe de commande de courant soit essentiellement haute lorsqu'un champ de dispersion entre des pôles, le rotor et le stator, est faible, et que la valeur de pointe de la courbe de commande de courant soit abaissée lorsque le champ de dispersion est fort.
